# EUROPÄISCHE PATENTANMELDUNG

(11) **EP 0 848 478 A1**
(43) Veröffentlichungstag der Anmeldung: **17.06.1998**
(21) Anmeldenummer: 97121188.3
(22) Anmeldetag: 02.12.1997
(51) Int. Cl.: H02K 9/19

(54) **Verfahren zur Kühlung einer Wechselstrommaschine, insbesondere Transversalflussmaschine**

(30) Priorität: 06.12.1996 DE 19650697; 06.12.1996 DE 29621170 U
(71) Anmelder: Voith Turbo GmbH & Co. KG, 89522 Heidenheim (DE)
(72) Erfinder: Lange,Andreas, 89551 Zang (DE); Mühlberger,Uwe, 89522 Heidenheim (DE); Müller,Robert,Dr., 89407 Dillingen (DE); Schölzel,Günter, 89522 Heidenheim (DE)
(74) Vertreter: Dr. Weitzel & Partner

(57) **Zusammenfassung**

Die Erfindung betrifft ein Verfahren zur Kühlung einer Wechselstrommaschine, insbesondere einer Transversalflußmaschine, mit einem Rotor und einem Stator, welche wenigstens jeweils einen radial inneren und/oder einen radial äußeren Zwischenraum miteinander bilden.

Die Erfindung ist gekennzeichnet durch das folgende Merkmal: ein Kühlmittel wird mit wenigstens geringem Überdruck direkt in wenigstens einen der Zwischenräume eingebracht und nach Wärmeaufnahme aus diesem herausgeführt.

## Beschreibung

Die Erfindung betrifft ein Verfahren zur Kühlung einer Wechselstrommaschine insbesondere einer Transversalflußmaschine, ferner eine Wechselstrommaschine, insbesondere Transversalflußmaschine.

Elektrische Maschinen in Form von Wechselstrommaschinen sind in verschiedenen Ausführungen aus einer Vielzahl von Druckschriften bekannt. Wechselstrommaschinen, beispielsweise Asynchronmaschinen oder Synchronmaschinen, die nach dem Prinzip der Drehfelderzeugung arbeiten, sind aus Dubbel, Taschenbuch für den Maschinenbau, Seite V18 - V31, bekannt.

Elektrische Maschinen in Form von Wechselstrommaschinen, die nach dem Transversalflußprinzip arbeiten, sind beispielsweise in den Druckschriften
(1) DE 35 36 538 A1
(2) DE 37 05 089 C1
(3) DE 39 04 516 C1
(4) DE 41 25 779 C1
offenbart. Diese beschreiben im wesentlichen das Grundprinzip und den Aufbau.

Wechselstrommaschinen, die nach dem Transversalflußprinzip arbeiten, umfassen wenigstens einen Stator mit mindestens einer Ankerwicklung und einen der Ankerwicklung gegenüberliegenden Rotor. Der Rotor besteht dabei aus wenigstens zwei nebeneinander angeordneten, durch eine Zwischenlage aus magnetisch und elektrisch nicht leitenden Material getrennten, Ringelementen, die in Umfangsrichtung eine Vielzahl von wechselweise angeordneten polarisierten Magneten und Weicheisenelementen aufweisen. Eine derartige Anordnung zweier Ringelemente bildet eine Polstruktur.

Vorzugsweise sind Transversalflußmaschinen symmetrisch aufgebaut. Diese umfassen dann zwei durch eine zentrale Trägerscheibe getrennte Polstrukturen.

Bei einer derartigen Maschine wird im Betrieb sowohl im Rotor als auch im Stator aufgrund der durch die Wicklungen und die Magnetkerne auftretenden und durch induzierte Wirbelströme bedingten Verlustleistungen Wärme erzeugt. Diese begrenzt bei Nichtergreifung geeigneter Maßnahmen die Belastbarkeit, die Belastungsdauer und damit auch die Einsetzbarkeit der Wechselstrommaschine. Insbesondere sind vor allem Situationen kritisch, bei denen eine solche Maschine bei hoher Last und vor allem hoher Drehzahl arbeitet.

Zur Vermeidung dieses nachteiligen Effektes ist es grundsätzlich bekannt, den Stator an Kühleinrichtungen anzuschließen. Auf diese Weise kann eine Erwärmung der Maschine und deren Komponenten verringert werden.

Aus der DE 43 35 848 A1 sind des weiteren eine Vielzahl von Möglichkeiten zur Verbesserung der Kühlwirkung bekannt, im einzelnen eine Kühlanordnung derart auszuführen, daß die Kühleinrichtungen mindestens einen Kühlkanal aufweisen, welcher im Bereich oder in der Nähe der Trägerscheibe in den Stator eingebaut und von einem Kühlfluid durchströmbar ist. Jeder Kühlkanal ist dabei von der Trägerscheibe nur durch eine Kanalabdeckung minimaler Dicke und den Luftspalt zwischen Rotor und Stator getrennt.

Ebenfalls aus dieser Druckschrift bekannt ist eine Ausführung mit axial verlaufendem Kühlkanal in einer Distanzscheibe, welche zwischen einem Paar von Statorabschnitten vorgesehen ist. Die Distanzscheibe liegt der Trägerscheibe radial gegenüber, ist symmetrisch zur Trägerscheibe angeordnet und gegenüber den Statorabschnitten thermisch isoliert. Diese besteht aus einem Material, das magnetisch passiv ist und eine gute Wärmeleitfähigkeit besitzt.

Eine weitere Möglichkeit zur Verbesserung der Wärmeabführung besteht darin, die Trägerscheibe und die im Bereich der Kühlkanäle gegenüberliegenden Bereiche des Stators mit ineinandergreifenden komplementären Zähnen zu versehen, welche im wesentlichen parallel zueinander verlaufende Flächen haben und durch einen Luftspalt voneinander getrennt sind.

Anstatt der vorstehend beschriebenen Maßnahmen oder zusätzlich kann ein Rotor eingesetzt werden, welcher an der Trägerscheibe befestigt, mindestens ein Paar von Sammlerringen aufweist, welche durch einen Isolierring aus magnetisch passiven und elektrisch nicht-leitendem Material verbunden sind und bei welchem in den Isolierring, in Umfangsrichtung verteilt, Speicherzellen eingearbeitet sind, die mit einem Phasenübergangsmaterial gefüllt sind.

Die Wirkung dieser bekannten Maßnahmen kann durch eine geeignete Werkstoffauswahl und Oberflächenbehandlung erhöht werden.

Diesen aus der Druckschrift DE 43 35 848 A1 bekannten Maßnahmen ist gemeinsam, daß es dabei um eine Möglichkeit der indirekten Rotorkühlung handelt, bei der die Verlustwärme zum Teil erst über isolierende Medien, z.B. Luft und Kunststoffe abgeführt werden kann bzw. im Falle der Speicherzellen die Verlustspitzen abgepuffert werden. Die Dauerleistung der Wechselstrommaschine wird dadurch beschnitten. Ein weiterer Nachteil besteht darin, daß große Kühleffekte nur mit hohem fertigungstechnischen Aufwand erzielt werden können. Die am stärksten beanspruchten und erwärmten Bereiche des Rotors können oft nicht optimal und vor allem nicht gleichmäßig gekühlt werden, insbesondere davon betroffen sind die Verbindungsstellen zwischen den einzelnen Ringelementen einer Polstruktur und/oder die Verbindung zwischen Trägerscheibe und den Polstrukturen.

Bei Drehfeldmaschinen, insbesondere Asynchronmaschinen, welche ebenfalls aus Rotor und Stator aufgebaut sind, wobei der Stator vorzugsweise auf einem größeren Durchmesser in radialer Richtung betrachtet als der Rotor angeordnet ist, entzieht sich der Rotor einer intensiven Kühlung, sofern nicht extern ein kühlendes Gas, beispielsweise Luft oder Stickstoff, oder eine Flüssigkeit, wie zum Beispiel Wasser oder Öl, zugeführt werden. Es ist allgemein bekannt, daß bei Traktionsantrieben größerer Leistung mit Drehfeldmaschinen sich bisher die Durchzugsbelüftung durchgesetzt hat. Bei kleineren Baugrößen bleibt somit die Kühlung des Rotors und damit auch des Statorwickelkopfes jedoch unbefriedigend. Zur Lösung dieses Problemes wird vorgeschlagen, das Bewegen der Luft im Stirnraum zu verbessern und einen internen Luftkreislauf zwischen Statorblechpaket und Rotorblechpaket zu realisieren, um die Kühlung zu verbessern. Bei dieser Lösung wird nur die in der elektrischen Maschine eingeschlossene Luft bewegt. Wärmeinhalt und Wärmeübergang führen jedoch zu keiner spürbaren Verbesserung.

Der Erfindung liegt deshalb die Aufgabe zugrunde, eine Kühlanordnung für eine Wechselstrommaschine, insbesondere eine Transversalflußmaschine derart auszuführen, daß neben der Gewährleistung einer wirkungsvollen Kühlung der Wechselstrommaschine, insbesondere des Rotors als besonders stark beanspruchtes Baute, ein geringer konstruktiver und kostenmäßiger Aufwand zu verzeichnen ist. Ein weiteres wesentliches Ziel besteht in der Erhöhung der Dauerleistung und damit der Verfügbarkeit.

Die erfindungsgemäße Lösung ist durch die Merkmale der Ansprüche 1, 3 und 18, 19 charakterisiert. Vorteilhafte Ausgestaltungen sind in den Unteransprüchen beschrieben.

Erfindungsgemäß erfolgt die Kühlung der besonders stark beanspruchten Bereiche einer Wechselstrommaschine, welche nach dem Transversalflußprinzip oder dem Drehfeldprinzip arbeitet, und einen, in einem Gehäuse angeordneten Rotor und einem Stator aufweisen, durch Direkteinspritzung bzw. Einbringung von Kühlmittel unter geringem Überdruck von Kühlmittel in den Bereich der zu kühlenden Teile, beispielsweise Rotor und Stator, Ankerwicklungen e.t.c. im Gehäuse, wobei das Kühlmittel nach Wärmeaufnahme aus diesem herausgeführt wird. der Kreislauf kann offen oder geschlossen sein. Des weiteren kann die Einbringung von Kühlmittel an jeder beliebigen Stelle erfolgen. Die Direkteinspritzung erfolgt dabei entweder direkt auf die Oberflächen von Rotor und/oder Stator und/oder Ankerwicklungen und/oder derart vor diesen Oberflächen in einem bestimmten Abstand, daß eine kühlende Wirkung auf die Oberflächen erzielt wird. Die Einbringrichtung sowie die Anzahl der Einbringstellen und deren Auslegung, d.h. Größe desr Einbringöffnung, Größe des leitungsdurchmessers, Größe des Einbringdruckes hängt vom konkreten Einsatzfall ab.

Bei Ausführungen von Wechselstrommaschinen, insbesondere Transversalflußmaschinen oder Drehfeldmaschine, mit einem Rotor und einen Stator, welche in radialer Richtung wenigstens jeweils einen inneren und/oder einen äußeren Zwischenraum miteinander bilden, wird erfindungsgemäß zur Kühlung Kühlmittel in wenigstens einen der Zwischenräume zwischen Rotor und Stator mit einem geringem Überdruck eingebracht. Ein erster Teil des Kühlmittels tritt in direkten Kontakt mit den erwärmten Bereichen am Rotor, ein zweiter mit den erwärmten Bereichen am Stator und den Ankerwicklungen. Ein dritter Teil vermischt sich mit der im Zwischenraum befindlichen Luft. Durch Wärmeübergang von den stark erwärmten Teilen und Wärmeströmumg innerhalb des eingebrachten Kühlmittels kann die Verlustwärme von den Magneten, den Sammlerelementen von Rotor und Stator und den Ankerwicklungen direkt abgeführt werden. Die konventionelle Möglichkeit der indirekten Kühlung wird somit durch eine direkte Kühlung ersetzt. Die Möglichkeit der direkten Kühlung zeichnet sich durch eine hohe Flexibilität hinsichtlich der Kühlmöglichkeiten mit einfachen Mitteln aus. Insbesondere sind an den einzelnen Bauteilen der Wechselstrommaschine, insbesondere der Transversalflußmaschine, keine zusätzlichen aufwendigen Veränderungen zur Erzeugung eines Kühleffektes vorzusehen. Es genügt im einfachsten Fall das Vorsehen eines einzigen Kühlkreislaufes. Des weiteren besteht die Möglichkeit, den Kühleffekt in Abhängigkeit von der Belastung zu steuern, beispielsweise durch Änderung der Einbringmenge, Einbringdauer.

Die Einbringung des Kühlmittels erfolgt vorzugsweise beidseitig des Rotors in die zwischen Rotor und Stator gebildeten Zwischenräume, d.h. sowohl in die in radialer Richtung äußeren Zwischenräume als auch in die in radialer Richtung inneren Zwischenräume zwischen Rotor und Stator, welche auch als Luftspalte bezeichnet werden. Eine einseitige Einbringung ist ebenfalls denkbar, jedoch bedeutet dies unter Umständen einen geringeren Kühleffekt. Die Einbringung kann auch über den Zwischenraum direkt auf den Rotoraußenmantel und/oder die Rotorfläche am Innenumfang des Rotors und/oder den Stator erfolgen, dies bedeutet, daß der Betriebsmittelstrahl in einem bestimmten, festlegbaren Winkel auf diese Flächen gerichtet ist.

Für die Einbringung des Kühlmittels in die Zwischenräume in Einbaulage in Umfangsrichtung betrachtet gibt es eine Vielzahl von Möglichkeiten. Vorzugsweise wird jedoch eine Variante gewählt, bei welcher das Kühlmittel im Schnitt der Wechselstrommaschine betrachtet, in Einbaulage in den radial äußeren und/oder inneren Zwischenraum eingebracht wird. Dies bietet den Vorteil, daß für den Rücklauf des Kühlmittels die Schwerkraft optimal ausgenutzt werden kann. Jede andere Möglichkeit der Einbringung des Betriebsmittels in Umfangsrichtung ist ebenfalls denkbar. Zu bevorzugen ist jedoch eine Ausführung mit Einbringung in einem Bereich oberhalb der Rotordrehachse.

Die Einbringung kann des weiteren bezogen auf einen Zwischenraum
1) im Schnitt in Einbaulage betrachtet entweder nur in einer bestimmten Höhe an einer Einbringstelle oder
2) über eine Vielzahl, in einem bestimmten Abstand in Umfangsrichtung zueinander angeordneter, einzelner Einbringstellen oder
3) über einen bestimmten Teilbereich der Zwischenräume in Umfangsrichtung erfolgen.

Die Einbringung des Kühlmittels kann auch in einen Zwischenraum erfolgen, welcher von Rotor und Gehäuse gebildet wird.

Vorrichtungsmäßig sind dazu entsprechende Durchgangsöffnungen, beispielsweis ein Form von kreisrunden Bohrungen und Langlöchern, im Statorgrundkörper, welcher entweder von einem separaten Gehäuse umschlossen wird oder gleichzeitig auch als Gehäuse ausgebildet sein kann vorzusehen.

Aufgrund der Einbringung mit Überdruck und evt. vorgenommener Fördermaßnahmen fließt das erwärmte Kühlmittel in einen Sammelbehälter. Dieser ist vorzugsweise in Schwerkraftrichtung , d.h. in einem Bereich in Schwerkraftrichtung unterhalb der Einbringstellen bezogen auf die Einbaulage angeordnet. In diesem Fall sind keine zusätzlichen Einrichtungen zur Förderung des Kühlmittels erforderlich. Eine Anordnung des Sammelbehälters, bei welcher eine Zuführung zu diesem entgegen oder senkrecht zur Schwerkraftrichtung erfolgt, ist bei Vorsehung geeigneter Maßnahmen zur Förderung des Kühlmittels ebenfalls denkbar.

Für die Anordnung des Sammelbehälters bestehen im einzelnen folgende zwei Grundmöglichkeiten:
1) Anordnung innerhalb des Gehäuses der Wechselstrommaschine, insbesondere der Transversalflußmaschine oder
2) Anordnung außerhalb des Gehäuses der Wechselstrommaschine, insbesondere der Transversalflußmaschine.

Die Einbringung des Kühlmittels, insbesondere die Festlegung der Richtung des Kühlmittelstrahles kann je nach gewünschtem Effekt auf folgende Arten erfolgen:
1) geneigt zur Rotationsrichtung des Rotors
2) in Rotationsrichtung des Rotors
3) senkrecht zur Rotationsrichtung des Rotors oder
4) entgegen der Rotationsrichtung des Rotors.

Eine Kombination bzw. eine Hintereinanderschaltung dieser Möglichkeiten ist bei entsprechender Anordnung der Einbringstellen ebenfalls denkbar. Zusätzlich können diese Möglichkeiten mit einer Neigung des Kühlmittelstrahles gegenüber den den Zwischenraum bildenden Elementen, d.h. dem Rotor oder dem Stator überlagert werden.

Vorzugsweise wird als Kühlmittel mit geringer Viskosität, d.h. mit einer geringen inneren Reibung infolge von Kraftwirkungen zwischen den Molekülen verwendet, beispielsweise in Form von niederviskosen Öl.

Die erfindungsgemäße Lösung bietet die Möglichkeit der Abfuhr von Wärme auch an den kritischen Bereichen, welche mittels konventionellen Kühlanordnungen bisher nur ungenügend gekühlt werden konnten. Gleichzeitig bietet die Verwendung von Öl zusätzlich die Möglichkeit des Korrossionsschutzes des Rotors.

Die Führung des Kühlmittels kann
1) wie bereits oben ausgeführt, in einem offenen Kreislauf mit einem Sammelbehälter, mit evt. vorzusehender Pumpeneinrichtung zur Förderung des Kühlmittels in der Einlaßleitung, welche den Sammelbehälter mit der Wechselstrommaschine, insbesondere der Transversalflußmaschine, bzw. mit den, den Zwischenräumen zugeordneten Einbringstellen verbindet, oder aber
2) in einem geschlossenen Kreislauf, welchem entsprechende Kühleinrichtungen zugeordnet sein können, erfolgen.

Im erstgenannten Fall kann das Kühlmittel im Sammelbehälter zwischengespeichert und dann dierekt über die Pumpeneinrichtung wieder der Einbringstelle zugeführt werden. In diesem Fall findet eine Abkühlung des Kühlmittels allein aufgrund der Zwischenspeicherung im Sammelbehälter statt. Vorzugweise wird das Kühlmittel jedoch im offenen Kreislauf über eine Kühleinrichtung, beispielsweise in Form eines Kühlers oder eines Wärmetauschers in der Einlaßleitung geführt. Ein offener Kreislauf bietet zudem den Vorteil der freien Dosierbarkeit der einzubringenden Kühlmittelmenge. Die Pumpeneinrichtung kann auch durch die Wechselstrommaschine wenigstens mittelbar, vorzugsweis jedoch direkt angetrieben werden. In diesem Fall ist der Kühlmittelstrom proportional zur Rotordrehzahl und der anfallenden Verlustmenge.

Im geschlossenen Kreislauf wird das Kühlmittel in der Regel fortlaufend zwischen Ablauf und Einbringstelle geführt. Diesen kann ebenfalls eine Kühleinrichtung, beispielsweise in Form eines Wärmetauschers oder eines Kühlers zugeordnet sein. Dem geschlossenen Kreislauf können jedoch auch durch Zuordnung von Zufuhr- und Abfuhrleitungen und Möglichkeiten der Zuund Abschaltung dieser Leitungen Mittel zum Austausch von Kühlmittel zugeordet sein, welche die Einhaltung einer bestimmten Temperatur des den Einbringstellen zugeführten Kühlmittels einhalten.

Bei Kühlung des Kühlmittels mittels eines Wärmetauschers, besteht die Möglichkeit, daß letzterer von einem zweiten Kühlmedium durchströmt wird, welches Bestandteil eines unabhängigen Kühlkreislaufes ist. Beispielsweise wird das Kühlmittel der Wechselstrommaschine, insbesondere der Transversalflußmaschine durch den Kühlwasserkreislauf einer Verbrennungskraftmaschine, vorzugsweise eines Dieselmotors zurückgekühlt. Eine derartige Ausführung ist insbesondere in dieselelektrischen Antrieben anwendbar.

In beiden Kreisläufen können des weiteren Mittel zur Beeinflussung der Durchflußmengen eingesetzt werden.

Zusätzlich besteht die Möglichkeit den Kühlmittelkreislauf mit einer Steuerung zur aktiven Beeinflussung, insbesondere der Einstellbarkeit von Einbringmenge, Einbringdauer und Einbringwinkel in Abhängigkeit von der Belastung zu koppeln. Dazu kann beispielsweise eine, die Belastung wenigstens mittelbar charakterisierende Größe überwacht werden. Der Einbringdruck kann ebenfalls einstellbar sein.

Die erfindungsgemäße Lösung ist bei Wechselstrommaschinen unterschiedlichsten Aufbaus anwendbar. Diese ist daher sowohl bei Wechselstrommaschinen, insbesondere Transversalflußmaschinen mit im wesentlichen symmetrischen Aufbau, d.h. bei Transversalflußmaschinen mit einem Rotor mit sich beidseitig von einer zentralen Trägerscheibe in axialer Richtung erstreckenden Polstrukturen als auch bei Ausführungen mit nur einer Polstruktur einsetzbar. Des weiteren sind auch Anwendungen mit Wechselstrommaschinen, welche nur einem Zwischenraum zwischen Rotor und Stator bilden, denkbar. Die Anzahl der möglichen, mit Kühlmittel zu versorgenden Zwischenräume ist dabei abhängig vom Aufbau der Wechselstrommaschine.

Die erfindungsgemäße Kühlung kann auch als Maßnahme zur zusätzlichen Kühlung in Kombination mit herkömmlichen Kühlmaßnahmen bei jeder Art von Wechselstrommaschinen eingesetzt werden.

Die konkrete und detailierte konstruktive Ausführung, insbesondere die Gestaltung der Verbindungsleitungen und Kanäle zwischen Zwischenraumaustritt und der Einbringstelle liegt im Ermessen des Fachmannes.

Die erfindungsgemäße Lösung der Aufgabe wird nachfolgend anhand von Figuren erläutert.

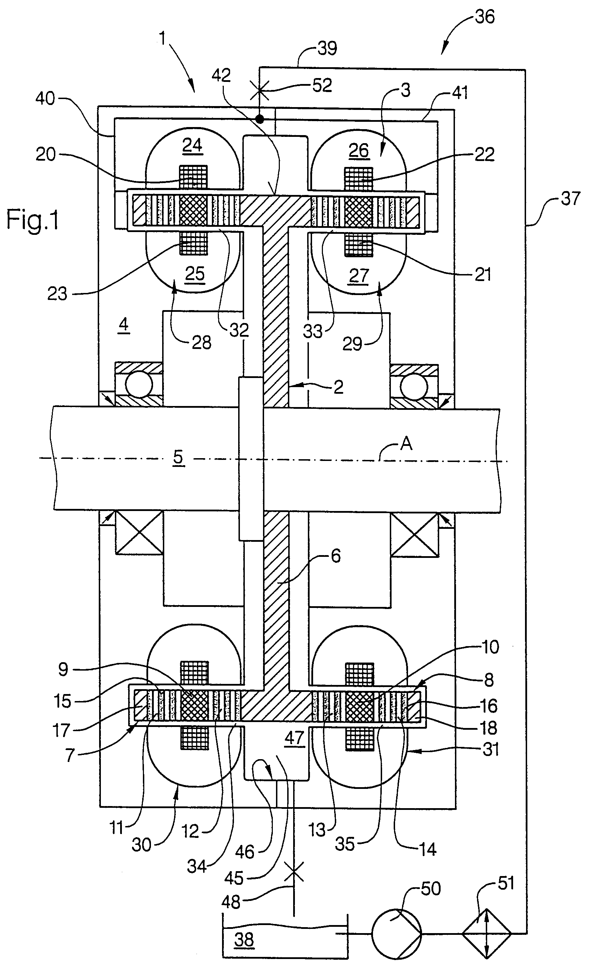

Die Figur 1 verdeutlicht schematisch anhand eines Axialschnittes den Aufbau einer Wechselstrommaschine in Form einer Transversalflußmaschine 1 in Einbaulage in stark vereinfachter Darstellung. Aus Gründen der Übersichtlichkeit wurde für einen Teil der rotationssymmetrischen Bauteile auf die Darstellung der Schraffur verzichtet. Die Transversalflußmaschine 1 umfaßt einen Rotor 2 und einen Stator 3. Der Rotor 2 umfaßt eine in einem Statorgehäuse 4 gelagerte Rotorwelle 5 mit einer darauf drehfest befestigten und sich im wesentlichen in radialer Richtung erstreckenden zentralen Trägerscheibe 6, an deren Stirnseiten beidseitig jeweils zur Rotordrehachse A koaxial angeordnete Polstrukturen - eine erste Polstruktur 7 und eine zweite Polstruktur 8 vorgesehen sind. Jede Polstruktur 7 bzw. 8 umfaßt zwei in axialer Richtung nebeneinander angeordnete und jeweils durch eine Zwischenlage 9 bzw. 10 aus magnetisch und elektrisch nicht leitendem Material getrennte Reihen 11 und 12 bzw. 13 und 14 aus in Umfangsrichtung wechselweise magnetisierten Magneten 15 mit dazwischenliegenden Weicheisenelementen 16. Stirnseitig ist im dargestellten Fall jeder Polstruktur 7 bzw. 8 ein Endring 17 bzw. 18 zugeordnet.

Der Stator 3 weist einen Grundkörper auf, in welchem in Umfangsrichtung verlaufende, radial äußere und/oder radial innere Ankerwicklungen, im dargestellten Fall 21 bzw. 23 und 20 bzw. 22 untergebracht sind. Diese sind von axial verlaufenden Schnittbandkernen 24, 25 bzw. 26 und 27 umgeben. Die Ankerwicklungen 21 und 23 bilden mit den zugehörigen Schnittbandkernen 25 und 27 bezogen auf die Einbaulage in radialer Richtung jeweils einen inneren Statorteil 28 bzw. 29, die Ankerwicklungen 20 und 22 bilden mit den Schnittbandkernen 24 und 25 jeweils einen äußeren Statorteil 30 bzw. 31.

Der innere Durchmesser dᵢ und der Außendurchmesser dₐ des Rotors 2 ist derart zu den Abmessungen der Statorteile 28 und 29 bzw. 30 und 31 gewählt, daß zwischen Rotor 2 und Stator 3 auch als Luftspalt bezeichnete Zwischenräume ausgbildet sind. Ein erster Zwischenraum 32 zwischen inneren Statorteil 28 und dem Rotor 2, ein zweiter Zwischenraum 33 zwischen innerem Statorteil 29 und ein dritter sowie vierter Zwischenraum 34 und 35 sind jeweils zwischen den äußeren Statorteilen 30 und 31 und dem Rotor 2 gebildet.

Der Transversalflußmaschine 1 ist eine Kühlvorrichtung 36 zugeordnet. Diese umfaßt einen offenen Kühlmittelkreislauf 37. Der Kühlmittelkreislauf 37 umfaßt einen Behälter 38, welcher bezogen auf die Rotorachse A im wesentlichen unterhalb von den radial äußeren Zwischenräumen 34 und 35 angeordnet ist. Der Behälter 38 ist über eine zentrale Zufuhrleitung 39, welche im dargestellten Fall in zwei Teilleitungen 40 und 41 verzweigt, die sich in axialer Richtung jeweils in einen Bereich, der außerhalb der Polstrukturen 7 und 8 liegt, erstrecken. Diese Teilleitungen 40 und 41 dienen im dargestellten Fall zur Einbringung von Kühlmittel, insbesondere der Kühlflüssigkeit, in die einzelnen Zwischenräume 32 bis 35 zwischen Rotor 2 und Stator 3. Zu diesem Zweck sind im Bereich der Einbringstellen, d.h. der Mündungen der Teilleitungen in die Zwischenräume 32 bis 35 entsprechende, hier im einzelnen nicht dargestellte Einrichtungen vorgesehen, welche das Kühlmittel unter einem vorzugsweise leichten Überdruck in die jeweiligen Zwischenräume 32 bis 35 eingeben. Dazu können beispielsweise entsprechend gestaltete Düsen eingesetzt werden. Im einzelnen versorgt hier die Teilleitung 40 die beiden Zwischenräume 32 und 34 und die Teilleitung 41 die beiden Zwischenräume 33 und 35.

Als Kühlmittel findet vorzugsweise Kühlflüssigkeit in Form von Öl mit geringer Viskosität Anwendung. Dieses wird im wesentlichen aus den Leitungen 40 und 41 direkt auf den Rotoraußenmantel 42 und in den radial inneren Zwischenraum 32 bzw. 33 eingesprüht. Ein erheblicher Teil des eingesprühten Kühlmittels tritt dabei in direkten Kontakt mit dem Rotor 2 und ermöglicht durch Wärmeübergang vom Rotor 2 und Wärmeströmung innerhalb des Kühlmittels einen Wärmeabfuhr vom Rotor 2. Das Kühlmittel wird dann in Rotordrehrichtung mitgerissen und sammelt sich schließlich im radial äußeren Bereich der Transversalflußmaschine 1, insbesondere im radial äußeren Bereich des Grundkörpers des Stators 3 in Einbaulage unterhalb der Rotordrehachse A, d.h. in Wirkungsrichtung der Schwerkraft sozusagen am Boden 46 der Grundkörperinnenwand 45 an. Zu diesem Zweck ist vorzugsweise beim dargestellten symmetrischen Aufbau der Transversalflußmaschine zwischen den einzelnen Statorteilen des Außenstators in der Innenwand eine in Umfangsrichtung des Grundkörpers und koaxial zur Rotordrehachse ringförmige Ausnehmung 47 eingearbeitet. An diese Ausnehmung ist eine zentrale Abführleitung 48 ankoppelbar. Diese erstreckt sich beispielsweise durch einen Teil des Grundkörpers und mündet in den offenen Behälter 38. Die Entleerung erfolgt dabei im wesentlichen unter dem Einfluß der Schwerkraft in den offenen Behälter 38. Das Kühlmittel strömt somit ständig um.

Der Begriff Leitung soll sich dabei nicht nur auf das rohr- oder schlauchförmige Element beziehen sondern auch jegliche Form zur Führung von Kühlmittel, insbesondere Kühlflüssigkeit, d.h. beispielsweise auch auf im Statorgehäuse bzw. im Grundkörper des Stators 3 angeordeten Kanälen, umfassen.

Zur Förderung des Kühlmittels vom Sammelbehälter 38 zu den Einbringstellen bzw. den Zwischenräumen erfolgt im dargestellten Fall mittels einer Pumpeneinrichtung 50. Im offenen Kreislauf 37 ist des weiteren eine Kühleinrichtung in Form eines Kühlers 51 vorgesehen.

Zusätzlich sind im Kreislauf 37 Mittel zur Beeinflussung der Durchflußmenge, beispielsweise in Form von Drosseln 52 vorgesehen.

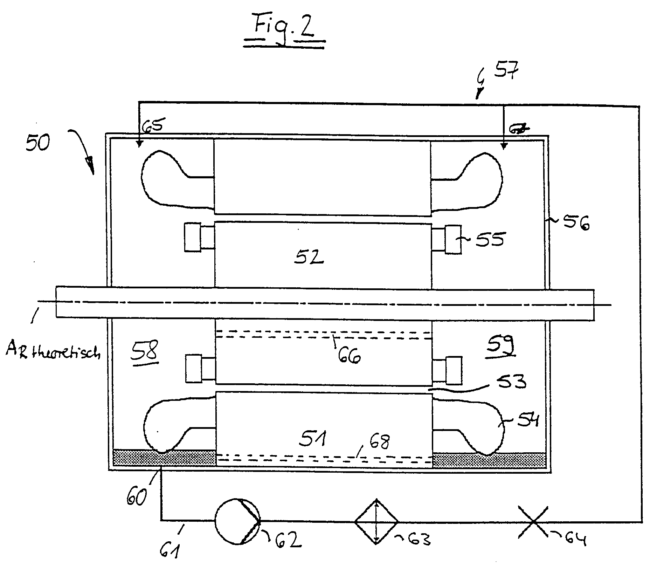

Die Figur 2 verdeutlicht in schematisch vereinfachter Darstellung anhand eines Axialschnittes beispielhaft die Möglichkeit der Nutzung des erfindungsgemäßen Verfahrens bei einer Wechselstrommaschine mit Drehfelderzeugung in Form einer Drehstom-Asynchronmaschine. Diese ist hier mit 50 bezeichnet. Die Drehstrom-Asynchronmaschine umfaßt einen Stator 51 und einen Rotor 52, wobei der Stator 51 dem Rotor 52 in Umfangsrichtung wenigstens teilweise unter Entstehung eines Zwischenraumes 53 umschließt. Der Stator 51, welcher auch Primärteil genannt wird, umfaßt eine Drehstromwicklung 54, während der Rotor 52 mit einer sogenannten Kurzschlußwicklung 55 versehen ist. Die Leistung wird mittels des im Stator erzeugten Drehfeldes auf den asynchron rotierenden Rotor 52 übertragen. Stator 51 und Rotor 52 sind in einem Gehäuse 56 angeordnet. Das Prinzip der Direkteinspritzung wird mit Hilfe einer Kühlvorrichtung 57 in Form eines offenen Kreislaufes realisiert. Als Behälter 58 dient in diesem Fall das Gehäuse 56. Es ist jedoch auch denkbar, daß ein Behälter oder Tank genutzt wird, welcher sich außerhalb des Gehäuses 56 befindet.

Im dargestellten Fall steht ein Teil des über den offenen Kreislauf 57 in das Gehäuse eingebrachten Kühlmittels sowohl bei rotierendem Rotor als auch bei stehendem Rotor in den Stimräumen 58 und 59, welche jeweils vom Stator bzw. Rotor 51 und 52 und der Gehäusewand des Gehäuses 56 gebildet werden. Von dort gelangt es über wenigstens einen Auslaß 60 in ein Leitungssystem 61 über Pumpeinrichtungen 62 und evt. wie hier dargestellt über einen Filter 63 und eine Drossel 64 zu Einführöffnungen, hier beispielshaft 65 und 67, am Gehäuse 56, über welche das Kühlmittel mittels entsprechender Einrichtungen eingespritzt oder - gedüst wird. Im dargestellten Fall wird das Kühlmittel im einzelnen auf den Wickelkopf 54 und/oder den Rotorkurzschlußring 55 und/oder Bohrungen bzw. Kanälen 66 im Rotorblechpaket und/oder in die Zwischenräume 53 aufgebracht.

Bei Ausführung eines Rotors 52 mit einer Vielzahl von in Umfangsrichtung verteilt angeordneten Kanälen 66, sind diese vorzugsweise auf einem gemeinsamen Durchmesser bezogen auf die theoretische Rotorachse A_{Rtheoretisch} angeordnet. Diese Kanäle 66 erstrecken sich vorzugsweise über die gesamte axiale Erstreckung des Rotors 52 zwischen den beiden Stirnseiten des Rotors. Die Auslegung hinsichtlich Größe, Verlauf und Abstand zur theoretischen Rotorachse A_{Rtheoretisch} liegt dabei im Ermessen des Fachmannes. Bei zusätzlichem Vorsehen von Kanälen 68 im Stator 51 bildet sich aufgrund der Rotorrotation zwischen den Kanälen 66 und 68 bei entsprechender Drehrichtung des Rotors 52 bei einer bestimmten Einspritzrichtung ein sogenannter innerer Kreislauf aus, welcher Flüssigkeit aus den stirnseitigen Bereichen 58 bzw. 59 durch die Kanäle 68 im Stator 51 und die Kanäle 66 im Rotor 52 befördert und im Kreislauf führt. Dieser Effekt schafft dann eine zusätzliche Kühlmöglichkeit für den Stator. Es besteht dabei - d.h. nur bei Einspritzung von Kühlmittel in die Kanäle 66 oder bei zusätzlicher Führung im Kreislauf die Möglichkeit, bei bereits erhältlichen Asynchronmaschinen, welche zum Zwecke der Kühlung entsprechende Bohrungen im Rotor und im Stator enthalten und diese zur Realisierung eines internen Luftkreislaufes nutzen, ohne Veränderung dieser Kanäle für den internen Kühlmittelkreislauf zu verwenden.

Die dargestellte Form der Einbringung stellt eine von vielen Möglichkeiten dar. Es ist somit auch eine Einbringung seitlich denkbar. Dabei kann jede beliebige Einbrinrichtung realisiert werden. Auch hinsichtlich der Zahl der Einbringstellen ist die vorliegende Ausführung nicht begrenzt.

Das erfindungsgemäße Verfahren ist hinsichtlich seiner Anwendbarkeit nicht auf eine bestimmte Funktionsweise der Wechselstrommaschine sowie einen bestimmten Aufbau beschränkt. Es ist lediglich sicherzustellen, daß im Bereich des Außenumfanges des Rotors ein Kühlmittelsumpf vorhanden ist, aus welchem aufgrund der Rotorrotation Kühlflüssigkeit bzw. Kühlmittel mitgerissen und somit zerstäubt wird.

Für die Ausgestaltung des Kühlmittelkreislaufes und die detailierte Ausführung der Einspritzmittel gibt es eine Vielzahl von Möglichkeiten. Entscheidend ist, daß die Einbringmenge in den entsprechenden Zwischenräumen oder den entsprechenden Bereichen der zu kühlenden Bauteile, derart gewählt wird, daß ein optimales Kühlergebnis ohne eine Verringerung des Wirkungsgrades bei sehr hohen Drehzahlen, d.h. Umfangsgeschwindigkeiten, da das eingebrachte Kühlmittel mit dem Rotor mitgerissen wird. Die konkrete Auslegung erfolgt entsprechend den Erfordernissen des Einsatzfalles.

## Patentansprüche

**1.** Verfahren zur Kühlung einer Wechselstrommaschine, mit einem Rotor und einem Stator, gekennzeichnet durch das folgende Merkmal: ein Kühlmittel wird mit wenigstens geringem Überdruck direkt im Bereich der zu kühlenden Teile im Gehäuse eingebracht und nach Wärmeaufnahme aus diesem herausgeführt.

**2.** Verfahren nach Anspruch 2, dadurch gekennzeichnet, daß das Kühlmittel in einem geschlossenen Kreislauf zwischen einem Ablauf und wenigstens einer Einbringstelle geführt wird.

**3.** Verfahren nach Anspruch 1, dadurch gekennzeichnet, daß das Kühlmittel in einem offenen Kreislauf zwischen einem Ablauf und wenigstens einer Einbringstelle geführt wird.

**4.** Verfahren zur Kühlung einer Wechselstrommaschine, insbesondere einer Transversalflußmaschine, mit einem Rotor und einem Stator, welche wenigstens jeweils einen radial inneren und/oder einen radial äußeren Zwischenraum miteinander bilden, gekennzeichnet durch das folgende Merkmal: ein Kühlmittel wird mit wenigstens geringem Überdruck direkt in wenigstens einen der Zwischenräume eingebracht und nach Wärmeaufnahme aus diesem herausgeführt.

**5.** Verfahren nach Anspruch 4, dadurch gekennzeichnet, daß das Kühlmittel in einem geschlossenen Kreislauf zwischen einem Ablauf und wenigstens einer, dem Zwischenraum zugeordneten Einbringstelle geführt wird.

**6.** Verfahren nach Anspruch 4, dadurch gekennzeichnet, daß das Kühlmittel in einem offenen Kreislauf zwischen einem Ablauf und wenigstens einer, dem Zwischenraum zugeordneten Einbringstelle geführt wird.

**7.** Verfahren nach einem der Ansprüche 4 bis 6, dadurchgekennzeichnet daß das Kühlmittel über eine Vielzahl in einem bestimmten Abstand in Umfangsrichtung voneinander angeordneten Einbringstellen in den Zwischenraum eingebracht wird.

**8.** Verfahren nach einem der Ansprüche 1 bis 3, dadurchgekennzeichnet, daß das Kühlmittel über einen, sich in Umfangsrichtung festlegbar erstreckenden Bereich in den Zwischenraum eingebracht wird.

**9.** Verfahren nach einem der Ansprüche 4 bis 8, dadurch gekennzeichnet, daß das Kühlmittel in einem Winkel zur Rotationsrichtung des Rotors und/oder zum Rotor und/oder Stator eingebracht wird.

**10.** Verfahren nach Anspruch 9, dadurch gekennzeichnet, daß das Kühlmittel senkrecht zur Rotationsrichtung des Rotors eingebracht wird.

**11.** Verfahren nach Anspruch 9, dadurchgekennzeichnet, daß das Kühlmittel in Rotationsrichtung des Rotors eingebracht wird.

**12.** Verfahren nach Anspruch 6, dadurchgekennzeichnet, daß das Kühlmittel entgegen der Rotationsrichtung des Rotors eingebracht wird.

**13.** Verfahren nach einem der Ansprüche 1 bis 12, dadurch gekennzeichnet, daß die Dauer der Einbringung des Kühlmittels einstellbar ist.

**14.** Verfahren nach Anspruch 13, dadurch gekenneichnet, daß die Einbringung und die Abfuhr des Kühlmittels während des Betriebes kontinuierlich erfolgt.

**15.** Verfahren nach einem der Ansprüche 1 bis 14, dadurch gekennzeichnet, daß die Menge des eingebrachten Kühlmittels veränderlich einstellbar ist.

**16.** Verfahren nach einem der Ansprüche 1 bis 15, dadurch gekennzeichnet, daß der Einbringwinkel veränderlich einstellbar ist.

**17.** Verfahren nach einem der Ansprüche 1 bis 16, dadurch gekennzeichnet, daß der Druck des einzubringenden Kühlmittels frei einstellbar ist.

**18.** Wechselstrommaschine
18.1 mit einem, in einem Gehäuse angeordneten Rotor und einem Stator;
18.2 mit wenigstens einer Kühleinrichtung; gekennzeichnet durch die folgenden Merkmale:
18.3 die Kühleinrichtung umfaßt wenigstens einen Kühlkreislauf, welcher wenigstens mittelbar den Ablauf aus dem Gehäuse mit wenigstens einer Einbringstelle für Kühlmittel im Gehäuse verbindet;
18.4 die Kühleinrichtung umfaßt Mittel, welche im Bereich der Einbringstelle dem Kühlmittel wenigstens einen geringen Überdruck aufprägen.

**19.** Wechselstrommaschine,
19.1 mit einem Rotor;
19.2 mit einem Stator;
19.3 mit wenigstens einer Kühleinrichtung;
19.4 Rotor und Stator bilden in radialer Richtung wenigstens jeweils einen inneren und einen äußeren Zwischenraum; gekennzeichnet durch das folgende Merkmal:
19.5 die Kühleinrichtung umfaßt wenigstens einen, wenigstens einem Zwischenraum zugeordneten Kühlkreislauf, welcher wenigstens mittelbar den Ablauf aus dem Zwischenraum mit der Einbringstelle in den Zwischenraum verbindet;
19.6 die Kühleinrichtung umfaßt Mittel, welche im Bereich der Einbringstelle dem Kühlmittel wenigstens einen geringen Überdruck aufprägen.

**20.** Wechselstrommaschine nach Anspruch 19, gekennezeichnet durch folgende Merkmale:
20.1 es ist ein gemeinsamer Kühlkreislauf für jeden der Zwischenräume vorgesehen;
20.2 der Kühlkreislauf umfaßt eine zentrale Ablaufleitung, welche mit den Ausgängen aus den Zwischenräumen koppelbar ist und eine zentrale Zuführleitung, welche mit einer Vielzahl von Verbindungsleitungen zu den einzelnen Einbringstellen der Zwischenräume koppelbar ist.

**21.** Wechselstrommaschine nach einem der Ansprüche 18 bis 20, dadurch gekennzeichnet, daß der Kühlmittelkreislauf als geschlossener Kreislauf ausgeführt ist.

**21.** Wechselstrommaschine nach einem der Ansprüche 18 bis 20, dadurch gekennzeichnet, daß der Kühlmittelkreislauf als offener Kreislauf ausgeführt ist.

**22.** Wechselstrommaschine nach Anspruch 20, gekennzeichnet durch folgende Merkmale:
22.1 der Kühlmittelkreislauf umfaßt einen Sammelbehälter;
22.2 der Sammelbehälter ist in Einbaulage unterhalb der unteren radial äußeren Zwischenräume angeordnet;
22.3 dem Sammelbehälter ist eine Pumpeneinrichtung nachgeschaltet, welche das Kühlmittel zu den Zwischenräumen fördert.

**23.** Wechselstrommaschine nach Anspruch 22, dadurch gekennzeichnet, daß diese die Pumpeneinrichtung im Kühlkreislauf antreibt.

**24.** Wechselstrommaschine nach einem der Ansprüche 18 bis 23, dadurch gekennzeichnet, daß das Mittel zur Überdruckerzeugung eine entsprechend gestaltete Düse ist.

**25.** Wechselstrommaschine nach einem der Ansprüche 18 bis 24, dadurch gekennzeichnet, daß im Kühlmittelkreislauf Mittel zur Kühlung angeordnet sind.

**26.** Wechselstrommaschine nach Anspruch 25, dadurch gekennzeichnet, daß das Mittel ein Wärmetauscher ist.

**27.** Wechselstrommaschine nach Anspruch 26, dadurch gekennzeichnet, daß der Wärmetauscher von einem zweiten Kühlmedium, welches Teil eines unabhängigen Kühlkreislaufes ist, durchströmt wird.

**28.** Wechselstrommaschine nach Anspruch 26, dadurch gekennzeichnet, daß das Mittel ein Kühler ist.

**29.** Wechselstrommaschine nach einem der Ansprüche 18 bis 28, dadurch gekennzeichnet, daß Mittel zur Einstellung der Einbringmenge und/oder Einspritzdauer des Kühlmittels vorgesehen sind.

**30.** Wechselstrommaschine nach einem der Ansprüche 18 bis 29, dadurch gekennzeichnet, daß das Kühlmittel niederviskoses Öl ist.

**31.** Wechselstrommaschine nach einem der Ansprüche 18 bis 30, dadurch gekennzeichnet, daß diese eine Transversalflußmaschine ist.

**32.** Wechselstrommaschine nach einem der Ansprüche 18 bis 30, dadurch gekennzeichnez, daß diese eine Asynchronmaschine ist.
